# EUROPÄISCHE PATENTANMELDUNG

(11) **EP 0 846 879 A2**
(43) Veröffentlichungstag der Anmeldung: **10.06.1998**
(21) Anmeldenummer: 97120162.9
(22) Anmeldetag: 18.11.1997
(51) Int. Cl.: F16C 13/00

(54) **Laminator**

(30) Priorität: 04.12.1996 DE 19650297
(71) Anmelder: ACHENBACH BUSCHHÜTTEN GmbH, 57223 Kreuztal (DE)
(72) Erfinder: Barten, Axel, Dipl.-Ing., 57078 Siegen (DE); Stahl, Werner, Ing., 57223 Kreuztal (DE); Schröder, Heinz-Dieter, Dipl.-Ing., 57250 Netphen (DE)
(74) Vertreter: Pürckhauer, Rolf, Dipl.-Ing.

(57) **Zusammenfassung**

Druckwalze (1) und Gegendruckwalze (2) eines Laminators zur Herstellung einer Verbundkombination (10) aus mindestens zwei Substratbahnen (11, 12) bestehen aus einem Walzenkern in Form einer Stützwalze (3), einem Walzenmantel (4) und einer Zwischenschicht (5) aus einem elastischen Material.

Die Formgebung (8) der Stützwalzen (3) der Walzen (1, 2) wird mittels eines EDV-Programmes in Abhängigkeit von den auf die Walzenzapfen (1a, 1b) und (2a, 2b) der Walzen (1, 2) wirkenden, variabel einstellbaren Anpreßkräften (P) und dem von der Mitte (13) zu den Enden (14, 15) der Walzen (1, 2) entsprechend der Biegung der Stützwalzen (3) zunehmenden Maß (a) des Zusammendrückens bzw. des Federweges der elastischen Zwischenschicht (5) zur Erzielung eines gleichmäßigen Anpreßdrucks in Walzenspalt (18) über die Bahnbreite 16 errechnet.

## Beschreibung

Die Erfindung betrifft Walzen für Mehrwalzeneinrichtungen, insbesondere für Laminatoren, bestehend aus einem Walzenkern, der als eine sich von der Walzenmitte zu den Walzenenden verjüngende Stützwalze aus Metall für einen koaxial zu der Stützwalze angeordneten Walzenmantel ausgebildet ist, sowie einer zwischen dem Walzenmantel und dem Walzenkern angeordneten Zwischenschicht aus einem elastischen Material wie Kunststoff oder Gummi (DE-AS 22 11 892).

Bei Walzen dieser Art, die z.B. bei Druckmaschinen nach der CH-PS 456 649 als Druckwalze und Gegendruckwalze eingesetzt werden, stützt sich der Walzenmantel im mittleren Bereich auf dem mittleren Abschnitt des Walzenkerns ab, und der Walzenkern und/oder der Walzenmantel weist bzw. weisen an ihren Enden eine von dem mittleren Abschnitt der Walze bzw. des Walzenmantels abweichende Profilierung auf. Bei einer Erhöhung der auf die Walzenzapfen der Walzenkerne von Druck- und Gegendruckwalze wirkenden Anpreßkräfte vergrößern sich im mittleren Abschnitt der Walzen die Kontaktzone und die Abstützkraft zwischen Walzenmantel und Walzenkern. Da jedoch die Eigenbiegung des Walzenmantels in dem nicht auf dem Walzenkern abgestützten Mantelabschnitt zu einer Biegelinie einer Parabel höherer Ordnung führt und außerdem mit zunehmendem Liniendruck bzw. zunehmender Anpreßkraft im Walzenspalt und der damit verbundenen, sich vergrößernden Auflage des Walzenmantels auf dem Walzenkern die Stützkraft zwischen Walzenmantel und Walzenkern im mittleren Abschnitt von Druckwalze und Gegendruckwalze zunimmt, während sich die Stützkraft zu den Walzenenden hin erst von dem Wert null beginnend steigert, sind eine über die Mantellänge konstante Abstützkraft des Walzenmantels und damit eine konstante Anpreßkraft im Walzenspalt nicht gegeben. Die sich über die Spaltbreite im Walzenspalt ändernde Anpreßkraft führt bei Druckmaschinen zu einer Verschlechterung der Druckqualität.

Aus der DE 36 35 580 A1 ist eine Druckwalze für Foulards und Kalander bekannt, die aus einem als Stützwalze ausgebildeten Walzenkern und einem Walzenmantel besteht, der sich auf dem Walzenkern mittels Stützelementen abstützt, die von einer Mittenabstützung ausgehend beiderseitig bis nahe den Walzenenden symmetrisch auf dem Walzenkern angeordnet sind. Die Stützelemente sind ringsteg- oder ringförmig ausgebildet und in ihrem Durchmesser entsprechend der geforderten Biegelinie differenziert in Richtung der Walzenenden abgestuft kleiner werdend ausgeführt, so daß sich zwischen den Stützelementen und dem Walzenmantel Spalte ergeben. Mit zunehmender Anpreßkraft werden die Spalte verringert, bis sich der Walzenmantel auf die Stützelemente auflegt. Die Stützelemente können zur weiteren Anpassung an die Biegelinie des Walzenkerns auch aus einem elastischen Werkstoff bestehen.

Die WO 95/33932 beschreibt eine bevorzugt als Mahlwalze eingesetzte Walze mit einem zylindrischen Kern und einem rohrförmigen Mantel, die einen Mantelraum bilden, in den zum Ausgleich von Verformungen und Durchbiegungen der Walze elastische Stützelemente gleicher oder unterschiedlicher Steifigkeit eingesetzt sind.

Mit den aus der DE 36 35 580 A1 und der WO 95/33932 bekannten Walzenkonstruktionen sind ebenfalls keine über die Spaltbreite konstanten Anpreßdrücke im Walzenspalt erreichbar.

Ferner ist aus der DE 41 14 313 C2 ein Laminator bekannt, der zum Bedrucken einer Trägerfolie mittels einer Farbfolie eingesetzt wird. Trägerfolie und Farbfolie laufen durch den von einer Druckwalze und einer Gegendruckwalze gebildeten Walzenspalt. Zur Verringerung einer Walzendurchbiegung werden Stützwalzen verwendet, die zur Einstellung der erforderlichen Anpreßkraft im Walzenspalt gegen die Druckwalze und die Gegendruckwalze anstellbar sind. Die für den Durchbiegungsausgleich und die Einstellung der Anpreßkraft der Laminatorwalzen eingesetzten Stützrollen verursachen Laufspuren auf den Laminatorwalzen, so daß die Standzeit dieser Walzen sehr begrenzt ist. Ferner können bei einem Laminator mit Stützrollen keine ummantelten Druckwalzen eingesetzt werden.

Die DE 41 27 723 A1 beschreibt eine Kaschier- bzw. Fügetechnik mit Haftvermittlern, z.B. Klebern unter Anwendung eines Laminators, bei der die zu verbindenden Substratbahnen, die aus Verbundmaterialien sowohl aus artgleichen und/oder artfremden Polymerfolien als auch aus anderen artfremden Werkstoffen wie z.B. Metall und Papier bestehen, unmittelbar vor der Zusammenführung im Kaschierwalzenspalt auf der Kontaktfläche einer physikalisch-chemischen Oberflächenbehandlung mittels z.B. einer elektrischen Coronabehandlung unter Verwendung von Aerosolen unterzogen werden. Die Vereinigung der Substrate erfolgt im Laminator, bestehend aus einer Stahlwalze und einem druckbeaufschlagten Gummipresseur, unter Druck und ggf. unter erhöhter Temperatur.

Schließlich zeigt die DE 94 14 073 U1 eine weitere Einsatzmöglichkeit eines Laminators. Unter Anwendung von höherer Temperatur und höherem Druck werden in einem kontinuierlichen Verfahren verschiedene Materialien wie Papier und/oder Karton mit Kunststoffen wie Polyethylen und Polypropylen in mehreren Lagen ohne Kleber zu einem recycelbaren und umweltfreundlichen Verpackungsmaterial laminiert.

Der Erfindung liegt die Aufgabe zugrunde, eine Walze, insbesondere für Laminatoren zu entwickeln, die die Erzeugung eines über die Bahnbreite konstanten Anpreßdruckes in dem zwischen zwei Druckwalzen gebildeten Walzenspalt ermöglicht.

Diese Aufgabe ist erfindungsgemäß gelöst durch eine Walze mit den Merkmalen des Patentanspruchs 1.

Die Unteransprüche beinhalten vorteilhafte und zweckmäßige Weiterbildungen der Erfindung.

Aus dem vorbeschriebenen Stand der Technik sind in Druckmaschinen und Laminatoren zum Einsatz kommende Walzen bekannt mit einem Walzenkern und einem zu diesem koaxial angeordneten Walzenmantel, bei denen zum Ausgleich von Verformungen und Durchbiegungen der Walze in dem zylindrischen Mantelraum zwischen Walzenmantel und Walzenkern eine elastische Zwischenschicht oder elastische Abstützelemente angeordnet sind, um eine gleichmäßige Abstützkraft zwischen Walzenmantel und Walzenkern und einen daraus resultierenden konstanten Anpreßdruck im Walzenspalt über die Spaltbreite bei einer Beaufschlagung eines Walzenpaares mit unterschiedlichen, einstellbaren Anpreßkräften zu erreichen. Die Praxis hat jedoch gezeigt, daß ein gleichmäßiger Anpreßdruck im Walzenspalt mit den bekannten Druckwalzen nicht zu erzielen ist.

Die Erfindung beruht darauf, zusätzlich zu der elastischen Abstützung des Walzenmantels auf dem Walzenkern die Formgebung bzw. das Profil des Walzenkerns und/oder der Innenfläche des Walzenmantels als wesentlichen Faktor zum Erzielen eines über die Bahnbreite konstanten Anpreßdrucks im Walzenspalt eines Walzenpaares einzubeziehen, wobei die Formgebung des Walzenkerns und/oder der Innenfläche des Walzenmantels mittels eines EDV-Programmes in Abhängigkeit von auf die Walzenzapfen eines Walzenpaares wirkenden, variabel einstellbaren Anpreßkräften und dem von der Mitte zu den Enden der Walzen entsprechend der Biegung der Walzenkerne zunehmenden Maß des Zusammendrückens der Zwischenschicht bzw. der Abstützelemente zwischen Walzenmantel und Walzenkern bestimmt wird.

Die Erfindung ist nachstehend anhand von Zeichnungsfiguren erläutert, die folgendes darstellen:
- Fig. 1a und Fig. 1b: ein Walzenpaar im unbelasteten und belasteten Zustand und
- Fig. 2: eine schematische, perspektivische Darstellung eines mit den erfindungsgemäßen Walzen ausgerüsteten Laminators.

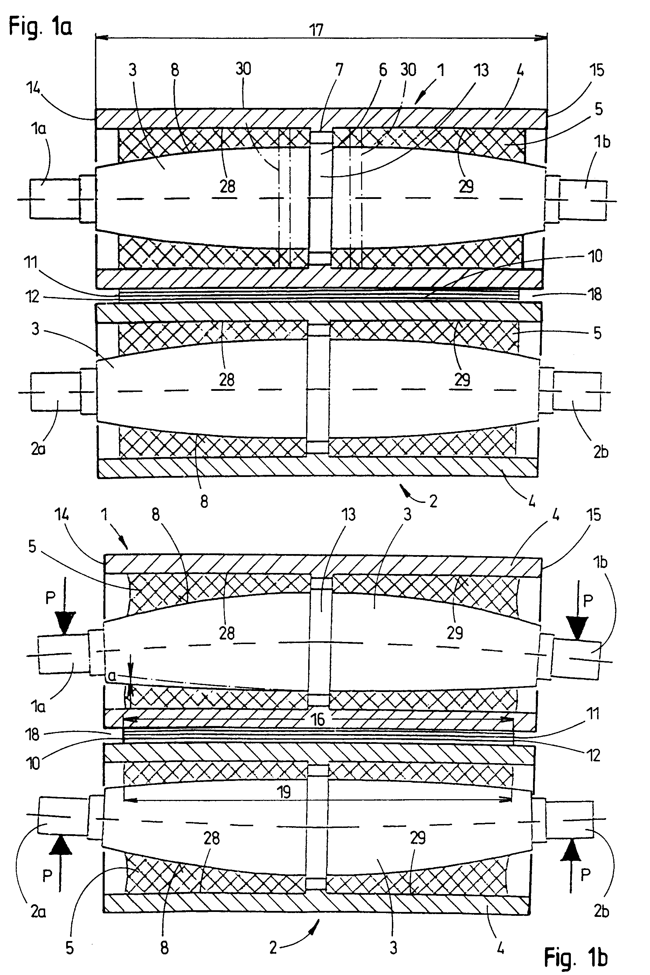

Druckwalze 1 und Gegendruckwalze 2 des in den Figuren 1a und 1b im unbelasteten und belasteten Zustand dargestellten Walzenpaares bestehen aus einem Walzenkern in Form einer Stützwalze 3 aus Metall, einem koaxial zu der Stützwalze 3 angeordneten Walzenmantel 4 und einer in den Mantelraum zwischen Walzenmantel 4 und Stützwalze 3 angeordneten, vorzugsweise eingegossenen Zwischenschicht 5 aus einem elastischen Material wie Kunststoff oder Gummi.

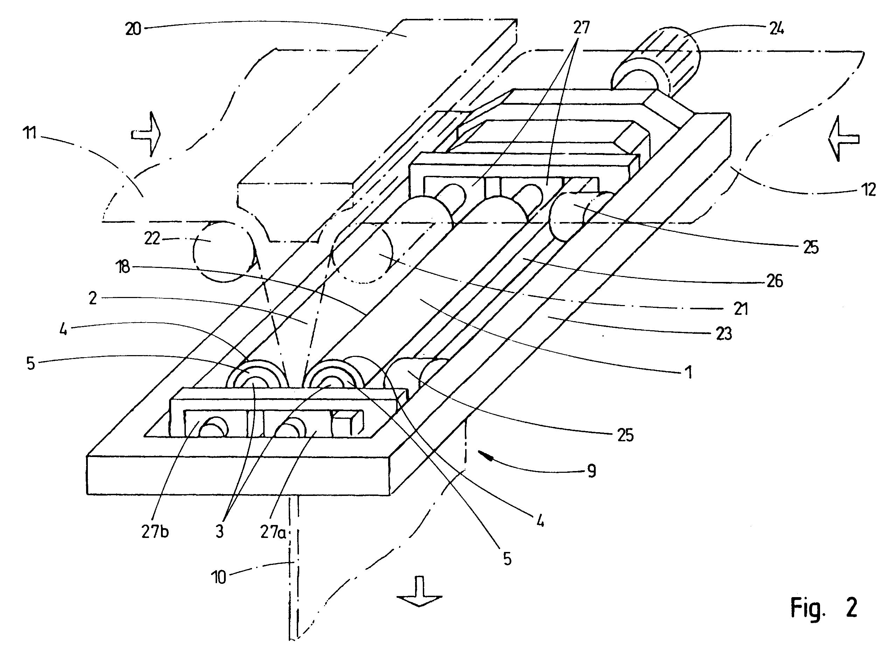

Die Formgebung 8 der Stützwalzen 3 der Druckwalze 1 und der Gegendruckwalze 2, die z.B. bei einem in Figur 2 dargestellten Laminator 9 zur Herstellung einer Verbundkombination 10 aus zwei oder mehreren Substratbahnen 11, 12, bestehend aus Papier und/oder polymeren Kunststoffen und/oder elektrisch leitfähigen Werkstoffen wie z.B. Metallfolie eingesetzt werden, wird mittels eines EDV-Programms in Abhängigkeit von den auf die Walzenzapfen 1a, 1b und 2a, 2b der Druckwalze 1 und der Gegendruckwalze 2 wirkenden, variabel einstellbaren Anpreßkräften P und dem von der Mitte 13 zu den Enden 14, 15 der Walzen 1, 2 entsprechend der Biegung der Stützwalzen 3 zunehmenden Maß a des Zusammendrückens bzw. des Federweges der elastischen Zwischenschicht 5 zur Erzielung einer gleichmäßigen Abstützkraft zwischen Walzenmantel 4 und Stützwalze 3 über die Walzenlänge 17 bzw. die Länge 19 der elastischen Zwischenschicht 5 und eines aus der Abstützkraft resultierenden, auf die Substratbahnen 11, 12 im Walzenspalt 18 über die Bahnbreite 16 wirkenden gleichmäßigen Anpreßdrucks errechnet.

Die elastische Zwischenschicht 5 der Druckwalze 1 und der Gegendruckwalze 2 kann eine gleichbleibende Federkonstante oder unterschiedliche Federkonstanten aufweisen.

Der Walzenmantel 4 kann aus Metall, Keramik oder Kunststoff hergestellt sein.

Es besteht die Möglichkeit, den Walzenmantel 4 der Druckwalze 1 und der Gegendruckwalze 2 mit einem gleichen oder andersartigen Werkstoff zur Erhöhung der Verschleißfestigkeit zu beschichten.

Schließlich können die Walzen 1, 2 mittels eines diese durchströmenden Heiz- bzw. Kühlmediums temperiert werden.

Dem Laminator 9 nach Fig. 2 ist eine Vorbehandlungseinrichtung 20, 21, 22 wie z.B. eine Einrichtung zur Coronabehandlung zur Oberflächenmodifizierung der Adhäsivschichten der zu verbindenden Substratbahnen 11, 12 vorgeordnet.

Die derart vorbehandelten Folien 11, 12 laufen in den von der Druckwalze 1 und der Gegendruckwalze 2 des Laminators 9 gebildeten Walzenspalt 18 ein und werden zur Verbundkombination 10 vereinigt.

Druckwalze 1 und Gegendruckwalze 2 des Laminators 9 sind in einen Maschinenrahmen 23 eingebaut und ggf. mit einem Antrieb 24 versehen. Die variabel einstellbaren Anpreßkräfte P werden durch die in den Maschinenrahmen 23 integrierte Anstellung 25 erzeugt und über eine Anstelltraverse 26 auf die verschiebbaren Lager 27a der Wellenzapfen 1a, 1b der Druckwalze 1 bzw. der nicht verschiebbaren Lager 27b der Walzenzapfen 2a, 2b der Gegendruckwalze 2 übertragen.

Weitere nicht dargestellte Ausführungsformen der Druckwalze 1 und der Gegendruckwalze 2 sind dadurch gekennzeichnet, daß die Stützwalzen 3 und die Innenfläche 28 der Walzenmäntel 4 eine Formgebung 8 bzw. 29 erhalten oder daß nur die Innenfläche 28 der Walzenmäntel 4 eine Formgebung 29 erhält, wobei die Formgebungen 8, 29 in der vorbeschriebenen Weise errechnet werden.

Außerdem besteht die Gestaltungsmöglichkeit, daß die Stützwalze 3 der Druckwalze 1 und der Gegendruckwalze 2 eine mittige Außenverzahnung 6 aufweist, die mit einer mittigen Innenverzahnung 7 des Walzenmantels 4 in Eingriff steht.

Schließlich besteht die Möglichkeit, die elastische Zwischenschicht 5 der Walzen 1, 2 in Form von Stützringen 30 auszubilden, die auf die Stützwalzen 3 aufgepreßt oder aufgeschrumpft sind, wie dies in Fig. 1a angedeutet ist.

## Patentansprüche

1. Walze für Mehrwalzeneinrichtungen, insbesondere für Laminatoren, mit einem Walzenkern, der als eine sich von der Walzenmitte zu den Walzenenden verjüngende Stützwalze aus Metall für einen koaxial zu der Stützwalze angeordneten Walzenmantel ausgebildet ist, sowie einer zwischen dem Walzenmantel und der Stützwalze angeordneten Zwischenschicht aus einem elastischen Material wie Kunststoff oder Gummi, gekennzeichnet durch eine Errechnung der Formgebung (8, 29) der Stützwalze (3) und/oder der Innenfläche (28) des Walzenmantels (4) mittels eines EDV-Programmes in Abhängigkeit von den auf die Walzenzapfen (1a, 1b; 2a, 2b) eines Walzenpaares (1, 2) wirkenden, variabel einstellbaren Anpreßkräften (P) und dem von der Mitte (13) zu den Enden (14, 15) der Walzen (1, 2) entsprechend der Biegung der Stützwalzen (3) zunehmenden Maß (a) des Zusammendrückens bzw. des Federweges der Zwischenschicht (5) zur Erzielung einer gleichmäßigen Abstützkraft zwischen Walzenmantel (4) und Stützwalze (3) über die Walzenlänge (17) bzw. die Länge (19) der elastischen Zwischenschicht (S) und eines aus der Abstützkraft resultierenden, auf die Substratbahnen (11, 12) im Walzenspalt (18) über die Bahnbreite (16) wirkenden gleichmäßigen Anpreßdrucks.

2. Walze nach Anspruch 1, dadurch gekennzeichnet, daß die elastische Zwischenschicht (5) eine gleichbleibende Federkonstante oder unterschiedliche Federkonstanten über die Länge (19) aufweist.

3. Walze nach einem der Ansprüche 1 und 2, dadurch gekennzeichnet, daß das Material der elastischen Zwischenschicht (5) in den Zwischenraum zwischen Walzenmantel (4) und Stützwalze (3) eingegossen ist.

4. Walze nach einem der Ansprüche 1 und 2, dadurch gekennzeichnet, daß die elastische Zwischenschicht (5) durch elastische Stützringe (30) gebildet wird, die in axialen Abständen auf der Stützwalze (3) angebracht sind.

5. Walze nach Anspruch 4, dadurch gekennzeichnet, daß die elastischen Stützringe (30) auf die Stützwalze (3) aufgepreßt oder aufgeschrumpft sind.

6. Walze nach einem der Ansprüche 1 bis 5, gekennzeichnet durch einen Walzenmantel (4) aus Metall, Keramik oder Kunststoff.

7. Walze nach einem der Ansprüche 1 bis 6, gekennzeichnet durch eine Außenbeschichtung des Walzenmantels (4) aus einem gleichen oder andersweitigen Werkstoff zur Erhöhung der Verschleißfestigkeit der Walzen (1, 2).

8. Walze nach einem der Ansprüche 1 bis 7, gekennzeichnet durch eine Temperierung der Walzen (1, 2) mittels eines die Walzen durchströmenden Heiz- bzw. Kühlmediums.

9. Walze nach einem der Ansprüche 1 bis 8, dadurch gekennzeichnet, daß die Stützwalze (3) eine mittige Außenverzahnung (6) aufweist, die mit einer mittigen Innenverzahnung (7) des Walzenmantels (4) in Eingriff steht.
